# EUROPÄISCHE PATENTSCHRIFT

(11) **EP 3 692 947 B1**
(45) Veröffentlichungstag und Bekanntmachung des Hinweises auf die Patenterteilung: **22.06.2022**
(21) Anmeldenummer: 19155640.6
(22) Anmeldetag: 06.02.2019
(51) Int. Cl.: A61C 13/15

(54) **POLYMERISATIONS- UND VERGÜTUNGSVORRICHTUNG**
POLYMERISATION AND COATING DEVICE
DISPOSITIF DE POLYMÉRISATION ET DE TRAITEMENT ANTIREFLET

(43) Veröffentlichungstag der Anmeldung: 12.08.2020
(73) Patentinhaber: Ivoclar Vivadent AG, 9494 Schaan (LI)
(72) Erfinder: Benz, Oliver, 9494 Schaan (LI)
(74) Vertreter: Baronetzky, Klaus

(56) Entgegenhaltungen:
- EP-A2- 0 581 226
- EP-A2- 2 417 929
- DE-U1- 8 226 016
- US-A1- 2010 252 753

## Beschreibung

Die Erfindung betrifft eine Polymerisations- und Vergütungsvorrichtung, gemäß dem Oberbegriff der Ansprüche 1 und 2.

Es ist seid langem bekannt, dass lichthärtende Kunststoffe durch Beaufschlagung mit Licht einer bestimmten Wellenlänge gehärtet werden können. Die bevorzugte Wellenlänge ist diejenige des oder der Photoinitiatoren, wobei bei heutigen lichthärtenden Kunststoffen häufig Photoinitiatoren mit Empfindlichkeitsmaxima um 400 nm und um 470 nm eingesetzt werden. Dementsprechend haben geeignete Polymerisationsgeräte, die auch als Lichthärtgeräte bezeichnet werden können, Emissionsmaxima der verwendeten Leuchtdioden oder Laserdioden bei etwa 400 nm und etwa 470 nm.

Es hat sich in vielen Fällen als günstig herausgestellt, die Lichthärtung zunächst lediglich teilweise vorzunehmen und in einem abschließenden Schritt die erwünschte Endhärte des Kunststoffs bereitzustellen.

Beispielsweise können dann die hergestellten Produkte in dem noch nicht vollständig gehärteten Zustand besser nachbearbeitet werden.

Wenn Dentalrestaurationsprodukte hergestellt werden, können beispielsweise noch Randspalten eliminiert werden, und ein gegebenenfalls zu beobachtendes Schrumpfen des Dentalrestaurationsteils kann durch eine Zusatzschicht kompensiert werden.

Ein weiteres Beispiel sind per Stereolithografie hergestellte Produkte, insbesondere wiederum Dentalrestaurationsteile, bei denen beim Slicen jede Schicht soweit ausgehärtet wird, dass die nachfolgende Schicht noch gut anhaftet. Das fertige Dentalrestaurationsteil sollte dann - zweckmäßig noch montiert auf der zugehörigen Bauplattform - in einem geeigneten Polymerisations- und Vergütungsgerät vergütet und endgehärtet werden.

Es ist auch bekannt geworden, durch Wärmehärtung die Polymerisation zu unterstützen. Gerade im Bereich von Dentalprodukten ist bei der Wärmehärtung, also der Beaufschlagung des Dentalrestaurationsteils mit Infrarotstrahlung, eine Gelbverfärbung zu beobachten, die häufig unerwünscht ist.

Eine Polymerisationsvorrichtung, wie sie sehr erfolgreich und weit verbreitet eingesetzt wurde und wird, ist die aus der DE 196 185 42 C2 bekannte Polymerisationsvorrichtung. Bei dieser Vorrichtung wird ein Dentalrestaurationsteil auf einer Unterlage als Ablageort abgestellt. Eine schwenkbare Haube wird dann über das Dentalrestaurationsteil gestülpt, und je nach Wahl des Benutzers können dann Lichtquellen für die Polymerisation und/oder Wärmequellen für die Polymerisation eingeschaltet werden.

Die Lichtquellen umgeben das Dentalrestaurationsteil und ermöglichen eine hohe Bestrahlungsintensität, so dass vergleichsweise rasch die erwünschte Polymerisation realisierbar ist.

Bei dem Polymerisationsgerät gemäß dem genannten Patent sind Lichtquellen ringsum, also kreisförmig um das Dentalrestaurationsteil angeordnet. Dort vorgesehene Reflektoren dienen der Bündelung und Fokussierung der abgegebenen Lichtenergie auf das Dentalrestaurationsteil.

Die erforderliche Zeitdauer für die Polymerisation, aber auch für eine Nachvergütung, ist basierend auf den dort verwendeten Lichtquellen günstig, aber nicht besonders kurz.

Gerade auch für die Vergütung von teilpolymerisierten Dentalrestaurationsteilen, die per Rapid Prototyping hergestellt sind, insbesondere per Stereolithografie, wäre eine höhere Lichtleistung und dementsprechend eine kürzere Behandlungszeit wünschenswert. Derartige Lichtquellen bedingen jedoch eine entsprechende Wärmeabgabe, die eine Kühlung der Lichtquellen erfordert.

Die Kühlung derartiger Lichtquellen würde jedoch ein Gebläse erfordern, das sich mit einer schwenkbaren Haube schlecht vereinbaren lässt.

Weitere bekannte Polymerisationsgeräte sind aus den Dokumenten EP0581226 und DE8226016U bekannt.

Daher liegt der Erfindung die Aufgabe zu Grunde, eine verbesserte Polymerisations- und Vergütungsvorrichtung gemäß dem Oberbegriff der Ansprüche 1 und 2 zu schaffen, die für die Härtung und Nachvergütung von Dentalrestaurationsteilen, die beispielsweise per Stereolithografie erzeugt sind, besonders geeignet ist, wobei dennoch Handhabungsvorteile wie eine kürzere Behandlungsdauer bei dennoch gleichen oder höchstens unwesentlich höheren Kosten erzielbar sein sollen.

Diese Aufgabe wird erfindungsgemäß durch Anspruch 1 bzw. 2 gelöst. Vorteilhafte Weiterbildungen ergeben sich aus den Unteransprüchen.

Erfindungsgemäß ist es zunächst vorgesehen, eine besondere Lichtkammer zu realisieren, die eine Tür aufweist. Die Lichtkammer ersetzt praktisch die Haube und ist stationär und nicht schwenkbar. Dies ermöglicht es, auch die Lichtquellen, bevorzugt als LEDs in Matrixform vorliegen, stationär anzuordnen und zu kühlen. Die Kühlung erfolgt durch einen Luftstrom in einem Luftkanal, der sich quer durch das Gehäuse der Polymerisations- und Vergütungsvorrichtung erstreckt.

Bevorzugt sind die Lichtquellen an einer Wand oder zwei Wänden der Lichtkammer angeordnet. Diese Wand wird dann von der Luft des Luftkanals hinterströmt; insofern liegt der Zwischenraum zwischen der Lichtkammerwand mit den Lichtquellen und der Gehäuseaußenseite in dem Luftkanal. Erfindungsgemäß ist das Polymerisations- und Vergütungsgerät oder die entsprechende Vorrichtung lichtdicht.

Typischerweise weisen zwar Luftkanäle mit offenen Einlässen und Auslässen auch eine Durchlässigkeit für Licht auf. Dies ist jedoch durch erfindungsgemäß besondere Maßnahmen unterbunden.

Damit ist die ergonomische Ausgestaltung der erfindungsgemäßen Vorrichtung deutlich verbessert; insbesondere wenn - wie es typisch ist - UV-Licht abgegeben wird, sind die Bediener ansonsten erheblicher UV-Bestrahlung ausgesetzt, und zwar dauerhaft.

UV-Bestrahlung gilt als hautkrebserregend und ist insofern unerwünscht. Zudem soll andauernd einwirkende UV-Strahlen augenschädigend sein.

Daher ist die erfindungsgemäße Lichtdichtheit wichtig und lässt sich in überraschend einfacher Weise durch die besondere Gestaltung des quer verlaufenden Luftkanals mit mehreren Umlenkungen realisieren.

Dies bedeutet, dass, obwohl die Lichtkammer von Luft durchströmt wird und dementsprechend auch Durchbrechungen der Lichtkammerwand vorgesehen sind, durch welche Licht austreten kann, durch Umlenkungen des Lichtkanals und teilweise durch separate Blenden sowohl eingangsseitig als auch ausgangsseitig der Lichtkammer dafür gesorgt wird, dass das dort austretende Licht nicht außerhalb des Gehäuses gelangt.

Die Überprüfung hat ergeben, dass bei voll eingeschalteter Lichtquelle und einem abgedunkelten Umgebungsraum weniger als 1 Promille der abgegebenen Lichtleistung nach außen dringt.

Eine solche UV-Beaufschlagung ist aber unkritisch und wird bereits von der Sonne bei bedecktem Himmel bereitgestellt.

Erfindungsgemäß besonders günstig ist es, dass sich der Luftkanal durch geschickte Anordnung mindestens teilweise außen um die Lichtkammer herum verlaufend erstreckt und mehrere Wärmequellen gleichzeitig kühlen kann.

Das dazugehörige Gebläse ist relativ zentral, also im Wesentlichen gleich weit weg vom Einlass und vom Auslass angeordnet, was der Wärmedämmung zugutekommt.

In einer weiteren vorteilhaften Ausgestaltung ist es vorgesehen, dass die Polymerisations- und Vergütungsvorrichtung (10) dahingehend lichtdicht ist, dass bei eingeschalteter Lichtquelle (72) höchstens 1%, insbesondere weniger als 1 Promille, der von der Lichtquelle (72) abgegebenen Lichtleistung bei geschlossener Tür zur Lichtkammer (24) nach aussen dringt. Diese Ausgestaltung läßt sich insofern als "lichtdicht" bezeichnen.

In vorteilhafter Ausgestaltung durchströmt der erfindungsgemäße Luftkanal von einem Lufteinlass an einer Seitenwand des Gehäuses ausgehend zunächst eine Leistungselektronik und eine Netzstromversorgung für das gesamte Gerät, die in einer Ebene unterhalb der Lichtkammer angeordnet sind.

Es erfolgt eine Umlenkung des Luftstroms im Luftkanal um 90 Grad nach oben in einen aufsteigenden Ast des Luftkanals.

Dort ist ein Axialgebläse angeordnet, das die Luft durch den Luftkanal saugt beziehungsweise drückt.

Anschließend an das Gebläse wird die Luft über eine schräg stehende Blende geleitet, um über deren Oberkante hinweg, so dass sie von der Oberkante der Blende ausgehend schräg nach unten strömt.

Hieran anschließend durchtritt die Luft einen Lichtkammereinlass und gelangt durch diesen als recht starker Blasstrom zu dem Dentalrestaurationsteil oder dem Dentalrestaurationsteilen.

Auch diese werden durch die darüber streichende Luft gekühlt.

Die Luft verlässt dann die Lichtkammer an einer zu der Wand des Lichtkammereinlasses sich quer erstreckenden Wand, die den Lichtkammerauslass aufweist.

Lichtkammereinlass und Lichtkammerauslass sind höhenversetzt gegeneinander, so dass der Luftstrom auch eine schräge Komponente erhält.

Im bevorzugten Ausführungsbeispiel ist der Lichtkammerauslass an der Rückwand der Lichtkammer vorgesehen.

Der Luftstrom wird erneut umgelenkt, zur Seite hin und umströmt die Lichtkammer Außen, bis er an die rechte Seitenwand gelangt.

An der rechten Seitenwand wird der Luftstrom erneut umgelenkt, und hinterströmt die dortige Wand.

Diese ist im oberen Bereich mit einem einer Matrix von LEDs bestückt. Der bestehende Luftstrom kühlt die LEDs.

An der Oberkante der rechten Lichtkammerseitenwand wird der Luftstrom erneut umgelenkt und überstreicht die Deckenwand der Lichtkammer.

Dort sind ebenfalls zahlreiche LEDs angeordnet, und der Luftstrom verläuft nach links über die Deckenwand der Lichtkammer hinweg, unterhalb der Deckenwand des Gehäuses.

An der linken Seitenwand des Gehäuses ist ein Luftauslass ausgebildet, durch welche hindurch der Luftstrom das Gehäuse verlässt.

Erfindungsgemäß hat es mit den Luftumlenkung eine besondere Bewandtnis:
Zum einen sind die Luftumlenkungen strömungsfreundlich gestaltet, beispielsweise mit Luftleitblechen oder entsprechenden Formteilen aus Kunststoff.
Zum anderen dient jede Luftumlenkung auch zugleich der Abschattung. So ist sichergestellt, dass Luftumlenkungen aufsummiert von mindestens 225 Grad zwischen der Lichtquelle und dem Lufteinlass und der der Lichtquelle und dem Luftauslass bestehen:
   Einlassseitig sind die 1. Luftumlenkung mit 90 Grad und die 2. Luftumlenkung mit 135 Grad vorgesehen. Auslassseitig die 3. Luftumlenkung mit 90 Grad, die 4. mit 90 Grad und die 5. mit 90 Grad vorgehen, insgesamt also 270 Grad.
   Auch das Gebläse ist bewusst einlassseitig vorgesehen, denn auslassseitig ist der aufsummierte Luftumlenkungswinkel höher als einlassseitig und das Gebläse dient seinerseits der Abschattung.

Ferner ist der Luftkanal innen völlig schwarz ausgebildet, so dass einfallendes Licht dort nicht reflektiert, sondern absorbiert wird.

Der Luftkanal hat insofern eine Doppelfunktion, nämlich der Luftförderung und zugleich der Lichtblockade.

Es versteht sich, dass auch im Übrigen Sorge getragen ist, dass kein UV-Licht unnötig nach außen fällt. So ist die Tür zur Lichtkammer mit einer Labyrinthdichtung umlaufend ausgestattet, und es besteht kein Spalt zwischen der Tür und dem Türrahmen.

Auch die Tür ist innen verspiegelt, ebenso wie die Lichtkammer im Übrigen.

Günstig ist es auch, dass die Lichtquellen an zwei unterschiedlichen und zueinander abgewickelten Wänden der Lichtkammer angeordnet sind. Die Lichtbeaufschlagung erfolgt dann ebenso in drei Dimensionen, insbesondere dann, wenn dass zu behandelnde Gut, also beispielsweise ein Dentalrestaurationsteil, auf einem Drehteller angebracht ist und sich während der Polymerisation und Vergütung dreht.

Ein solcher Drehteller kann vorsorglich recht groß ausgebildet sein und einen Durchmesser aufweisen, der deutlich mehr als die Hälfte der Bodenfläche der Lichtkammer einnimmt. Dann ist es möglich, sowohl kleinere als auch größere Dentalrestaurationsteile dort abzulegen und zu behandeln, oder auch beispielsweise eine Bauplattform eines Stereolithografiegeräts, mit den noch dort haftenden und angebrachten Dentalrestaurationsteilen.

Auch die Höhe und Breite der Lichtkammer ist so bemessen, dass eine derartige Bauplattform samt den zu härtenden Dentalrestaurationsteilen aufgenommen werden kann, ebenso die Tür zu der Lichtkammer.

Besonders günstig ist es auch, dass der Luftstrom des Luftkanals sich durch die Lichtkammer hindurch erstreckt. Das Dentalrestaurationsteil wird daher auch während der Härtung gekühlt, so dass die gefürchtete Gelbfärbung aufgrund Wärmebeaufschlagung sicher vermindert oder sogar vermieden werden kann. Überraschend ist dies möglich, obwohl eine sehr intensive Lichtbeaufschlagung und dementsprechend eine sehr kurze Behandlungszeit vorgesehen ist. Erfindungsgemäß günstig ist es auch, dass die vergleichsweise viel Wärme abgebenden Lichtquellen eher gegen Ende des Luftkanals gekühlt werden. Die den Luftkanal durchtretende Luft ist zunächst recht kalt und wird beispielsweise im Bereich des Netzteils und der Leistungselektronik um weniges erwärmt, beispielsweise um 3 bis 5 Grad.

Mit diesem Temperaturniveau wird sie den Dentalrestaurationsteilen zugeleitet, die dementsprechend gut gekühlt werden können.

Erst hieran anschließend erfolgt eine Temperaturerhöhung, die durch die Lichtquellen durchaus bis zu 20 oder sogar 30 Grad betragen kann.

Wenn die austretende Luft mehr als 60 Grad heiß sein sollte, kann es bevorzugt sein, diese erneut zusätzlich beispielsweise nach hinten/unten umzuleiten, um eine weite Wärmevernichtung zu erzielen.

Die offenbarte Bestrahlungsstärke mit beispielsweise 50 oder gar 160 bis 280 mW pro Quadratzentimeter ermöglicht eine rasche Polymerisation und Vergütung oder Nachvergütung. Hiermit ist sichergestellt, dass die Betriebsdauer gegenüber bekannten Nachvergütungsgeräten deutlich reduziert ist, beispielsweise auf 5 min, was einen entsprechend hohen Durchsatz ermöglicht.

Die Messung erfolgt bevorzugt wie folgt:
Zunächst wird das abgegebene Licht mit eine Ulbrichtkugel gemessen.

Dann wird die Lichtquelle auf den Mess-Sensor ausgerichtet.

Dessen Messwert wird erfasst und mit dem Messwert der Ulbrichtkugel abgeglichen.

Weitere Vorteile, Einzelheiten und Merkmale ergeben sich aus der nachfolgenden Beschreibung dreier Ausführungsbeispiele der Erfindung anhand der Zeichnung.

Es zeigen:
- Fig. 1: eine perspektivische schematische Ansicht einer erfindungsgemäßen Polymerisations- und Vergütungsvorrichtung in einer Ausführungsform der Erfindung;
- Fig. 2: ein Schnitt durch eine weitere Ausführungsform der Erfindung; und
- Fig. 3: eine perspektivische schematische Ansicht einer weiteren Polymerisations- und Vergütungsvorrichtung in einer weiteren Ausführungsform der Erfindung

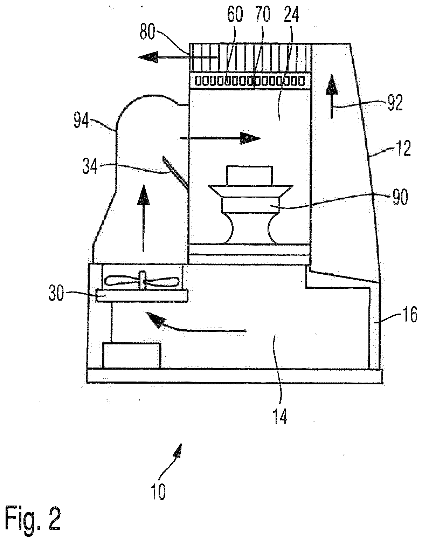

Die in Fig. 2 dargestellte Polymerisations- und Vergütungsvorrichtung 10 weist ein Gehäuse 12 auf, dass in an sich bekannter Weise quaderförmig ist. Bei Bedarf kann aber auch eine beliebige andere Form eines Gehäuses eingesetzt werden.

Das Gehäuse wird von einem Luftkanal 14 durchströmt, dessen Ausgestaltung hier im Einzelnen erläutert wird.

Der Luftkanal 14 beginnt bei einem Lufteinlass 16 unten an der rechten Seitenwand 20 des Gehäuses 12.

Der Luftkanal 14 erstreckt sich von dem Lufteinlass 16 ausgehend durch eine Leistungselektronik 22 hindurch, zu der auch ein entsprechend dimensioniertes Netzteil gehören kann.

Dieses ist in dem Luftkanal 14 unterhalb einer Lichtkammer 24 angeordnet.

Von der Leistungselektronik 22 nach weiter links erstreckt sich der Luftkanal 14 in dem Bereich einer ersten Luftumlenkung 26, in der die strömende Luft nach oben umgelenkt wird. Hierzu sind hier nicht dargestellte Luftleitvorrichtungen unterstützend vorgesehen.

Der Luftkanal 14 erstreckt sich weiter durch ein Gebläse 30, dass als Axiallüfter ausgebildet ist.

Er erstreckt sich nach oben bis zu einer zweiten Luftumlenkung 32. Dort überstreicht er eine Blende 34, bevor er an einem Lichtkammereinlass 36 in die Lichtkammer 24 gerät.

In der Lichtkammer 24 ist ein Dentalrestaurationsteil 40 auf einem Drehteller 42 angeordnet. Es wird von dem Luftstrom überstrichen, wobei durch die Luftführung dort eine weite Umlenkung 44 stattfindet.

Der Lichtkammereinlass 36 ist an der linken Seitenwand 46 der Lichtkammer 24 ausgebildet. Er ist recht weit unten angeordnet, während ein Lichtkammerauslass 48 an einer hinteren Rückwand 50 der Lichtkammer ausgebildet ist, und zwar recht weit oben.

Die Luft strömt im Luftkanal 14 durch die Rückwand 50 der Lichtkammer 24 hindurch und wird dann an einer weiteren Luftumlenkung 52, der 3. Luftumlenkung, zunächst nach rechts abgelenkt, um wieder in den Bereich der rechten Seitenwand 20 des Gehäuses zu gelangen.

Von dort wird die Luft erneut nach vorne abgelenkt, also auf der gleichen horizontalen Ebene, jedoch in Richtung von der Rückwand 50 weg.

An der rechten Seitenwand 56 der Lichtkammer 24 verläuft die Luft nach oben, so dass insofern eine weitere Luftumlenkung 54 vorliegt.

Dort sind Lichtquellen 60 in Form einer LED-Matrix angeordnet. Diese sind im Bereich der Seitenwand 56 gefasst und strahlen in die Lichtkammer 24 hinein. Sie stecken jedoch so in entsprechenden Löchern, dass ihr überwiegender Teil sich hinter der Seitenwand 56 befindet, dort wird sowohl Licht abgegeben und nach vorne gebündelt, als auch die entsprechende Verlustwärme.

Diese wird vom Luftkanal 14 beziehungsweise der von ihm geführten Luft erfasst und abgeleitet.

Es erfolgt eine 5. Luftumlenkung 64 an dem oberen Ende der Seitenwand 56 nach horizontal links, über die Deckenwand 70 der Lichtkammer 24 hinweg.

Dort sind weitere Lichtquellen 72 ebenfalls in Matrixform angeordnet und werden in der gleichen Weise von der überstreichenden Luft gekühlt.

Insofern wird sowohl die Deckenwand 70 als auch die Seitenwand 56 der Lichtkammer 24 hinterströmt.

Die Luft des Luftkanals 14 streicht über die gesamte Deckenwand 70 nach links und auch über die linke Seitenwand 46 der Lichtkammer hinausgehend.

Sie erreicht einen Luftauslass 80, der im Bereich der linken Seitenwand 82 des Gehäuses 12 ausgebildet ist.

An dieser Stelle verlässt die Luft die Polymerisations- und Vergütungsvorrichtung 10, erwärmt durch die mehreren Wärmequellen, nachdem sie diese gekühlt hat.

Die dargestellte Luftströmung ist durch ein einziges Gebläse 30 realisiert, das zudem im Inneren des Gehäuses 12 fern der Einlässe und Auslässe angeordnet ist, so dass von den dort erzeugten Luftwirbelgeräuschen vergleichsweise wenig zu hören sind.

Es versteht sich, dass die Lichtkammer 24 nach vorne hin eine Tür aufweist, über welche das Dentalrestaurationsteil 40 in die Lichtkammer 24 einbringbar und aus dieser entnehmbar ist.

Diese ist hier nicht dargestellt, jedoch mit einer Labyrinthdichtung lichtdicht an das Gehäuse 12 anschließend verschlossen.

Eine weitere Ausführungsform der erfindungsgemäßen Polymerisations- und Vergütungsvorrichtung 10 ist aus Fig. 2 ersichtlich. Dort bedeuten die gleichen Bezugszeichen gleiche oder entsprechende Teile.

Die Luft wird im Bereich des Lufteinlasses 16 angesaugt von dem Gebläse 30 und durchströmt das Gehäuse 12 entlang eines Luftkanals 14.

Es wird das Gebläse 30, das wiederum eine sich vertikal erstreckende Achse aufweist, durchströmt, und die Luft gelangt an einer Blende 34 vorbei in die Lichtkammer 24.

Dort ist eine Bauplattform 90 eines Stereolithografiegeräts angeordnet, die ihrerseits das Dentalrestaurationsteil 40 trägt. Dieses wird von der überströmenden Luft gekühlt. Die Luft verlässt die Lichtkammer 24 an der gegenüberliegenden Seite und wird entlang des Pfeils 92 sich aufwärts geleitet. Die Luft hinterströmt die Deckenwand 70 der Lichtkammer 24 und kühlt die dort angeordneten LEDs 60. An einem Luftauslass 80 wird das Gehäuse 12 verlassen.

Es ist ersichtlich, dass beispielsweise an der Blende 34 die Luft über gekrümmte Formen, die Luftleitvorrichtungen 94 bilden, turbulenzarm und nahezu laminar umgelenkt wird. Dies dient der Strömungseffizienz der Luft, wobei auch die Ausführungsform gemäß Fig. 2 lichtdicht ist.

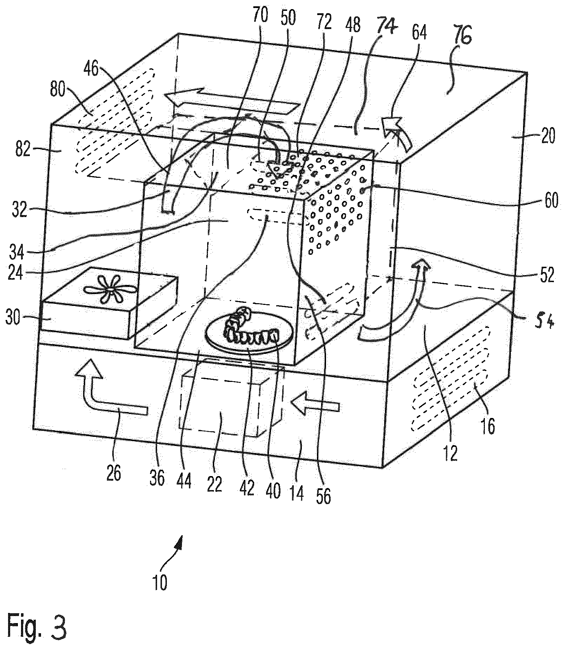

Eine weitere Ausführungsform der erfindungsgemäßen Polymerisations- und Vergütungsvorrichtung 10 ist in Fig. 3 dargestellt.

Gleiche Bezugszeichen weisen hier wie auch in den weiteren Figuren auf gleiche oder ähnliche Teile hin.

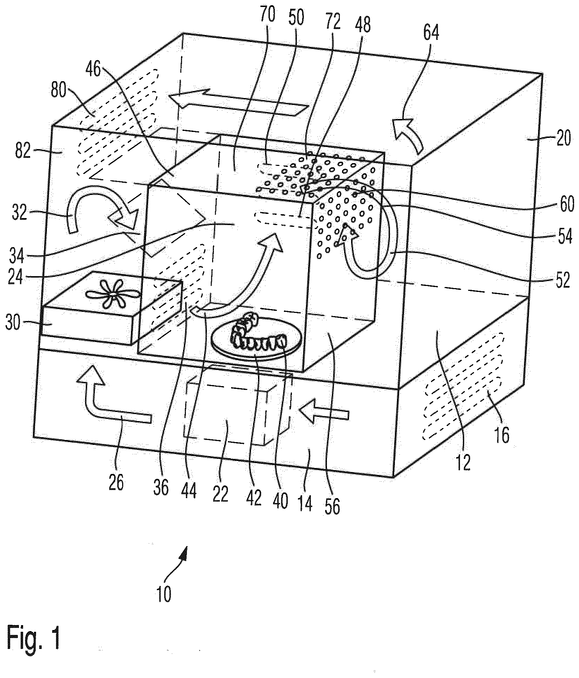

Bis zum Gebläse 30 entspricht der Luftkanal 14 in seinem Verlauf der Ausführungsform gemäß Fig. 1.

Die zweite Luftumlenkung 32 ist jedoch nach rückwärts, also zur Rückwand des Gehäuses 12 hin, versetzt, ebenso wie die Blende 34, über welche die Luft strömt, und die ebenfalls schrägstehend ausgebildet ist.

Bei dieser Ausführungsform ist der Lichtkammereinlass 36 für das Einströmen der Luft in die Lichtkammer 24 an der Rückwand 50 der Lichtkammer 24 ausgebildet, und zwar der Oberwand der Lichtkammer 24 benachbart.

Die Luft strömt von oben schräg nach unten über das Dentalrestaurationsteil 40 hinweg. Zusätzlich werden die Unterseiten der Lichtquellen 72 von dem Luftstrom überströmt.

Der Lichtkammerauslass 48 ist hingegen in der rechten Seitenwand 56 der Lichtkammer 24 ausgebildet. Er ist recht weit unten ausgebildet, so dass wiederum eine schräge Luftströmung entsteht, von oben/hinten nach unten/ rechts, also quer durch die Lichtkammer 24.

Ausgehend von der rechten Lichtkammer-Seitenwand 56 unten strömt die Luft an der rechten Seitenwand 20 des Gehäuses entlang nach oben, wobei zunächst wiederum eine Luftumlenkung 54 erfolgt, die die Luft in Aufwärtsrichtung umlenkt.

Die Luft strömt an den Lichtquellen 60 an der Lichtkammer-Seitenwand 56 entlang. Sie wird wiederum mit einer weiteren Luftumlenkung 64 am oberen Ende der Lichtkammer/Seitenwand 56 horizontal nach links abgelenkt, über die Deckenwand 70 der Lichtkammer 24 streichend und dort die weiteren Lichtquellen 72 abkühlend.

Insofern wird auch bei dieser Ausführungsform sowohl die rechte Seitenwand 56 der Lichtkammer 24 als auch die Deckenwand 70 der Lichtkammer 24 hinterströmt, also sämtliche Wände der Lichtkammer 24, die mit Lichtquellen 60 bzw. 72 bestückt sind.

Bekanntlich sind die LED-Chips die Wärmequellen von Lichtquellen 72, und diese liegen hinter den jeweiligen Montagewänden 56 und 70, und werden insofern gezielt von der Luftströmung gekühlt.

Bei dieser Ausgestaltung ist eine nach hinten verlängerte Trennwand 74 vorgesehen, die die Luft eingangsseitig der Lichtkammer 24 und ausgangsseitig der Lichtkammer 24 voneinander trennt. Diese erstreckt sich horizontal, aber auch entlang der rechten Seitenwand 56 der Lichtkammer 24 nach unten und verlängert im Grunde die im wesentlichen kubusförmige Lichtkammer 24 bis zur Rückwand 76 des Gehäuses.

Es versteht sich, dass durch an sich bekannte strömungstechnische Maßnahmen die Strömungsgeschwindigkeit innerhalb des Luftkanals 24 an die Erfordernisse anpassbar ist.

Beispielsweise kann eine Querschnittsverjüngung des Luftkanals 24 im Bereich der Lichtquellen 60 und 72, aber auch im Bereich der Leistungselektronik 22 vorgenommen werden. Die dort dann hohe Strömungsgeschwindigkeit erzeugt intensive Wirbel, die den Wärmetausch begünstigen. Durch die demgegenüber geringe Strömungsgeschwindigkeit in den übrigen Bereichen des Luftkanals 24, insbesondere im Bereich der Strömungsumlenkungen 26, 32, 54 und 64, entstehen dort geringe Reibungsverluste.

Erfindungsgemäß günstig ist insofern der Wechsel zwischen Strömungsberuhigungszonen und Starkströmungszonen.

Insofern ist es auch günstig, sowohl angrenzend an den Lufteinlass 16 als auch an den Luftauslass 80 je lange gerade und gleichförmige Strömungswege vorliegen - jeweils über die gesamte Breite des Gehäuses 12 -, so dass dem Einlass 16 und dem Auslass 80 benachbart je geringe Strömungsgeschwindigkeiten bestehen, aufgrund der dort je großen Strömungsquerschnitte.

## Patentansprüche

1. Polymerisations- und Vergütungsvorrichtung, für das Vergüten, insbesondere für das Nachvergüten, von Dentalrestaurationsteilen (40) aus polymerisierbaren Kunststoffen, insbesondere durch Stereolithograpie hergestellten Dentalrestaurationsteilen (40), mit mindestens einer Lichtquelle (72), die im Bereich sichtbarer und/oder ultravioletter Wellenlängen emittiert, und mit einem Gebläse (30) für die Kühlung der Polymerisations- und Vergütungsvorrichtung (10) mit einer Lichtkammer (24), bei der mindestens eine Wand, z.B. Deckenwand (70), Bodenwand oder Seitenwand (56), mit der mindestens einen Lichtquelle (60, 72) bestückt ist, und mit einer Tür zur Lichtkammer (24), mit einem Ablageort für Dentalrestaurationsteile (40), wobei das Gebläse (30) in einem Luftkanal (14) angeordnet ist, der sich durch ein Gehäuse (12) der Polymerisations- und Vergütungsvorrichtung (10) erstreckt und insbesondere mindestens die Lichtquellen-Wand hinterströmt **dadurch gekennzeichnet** , dassder Luftkanal (14) sich durch die Lichtkammer (24) hindurch erstreckt und die Lichtkammer (24) einen Lichtkammereinlass (36) und einen Lichtkammerauslass (48) aufweist, die an unterschiedlichen Wänden der Lichtkammer (24) angebracht sind und dass der Luftkanal mit mehreren Umlenkungen quer durch das Gehäuse verläuft und durch die besondere Gestaltung lichtdicht ist.

2. Polymerisations- und Vergütungsvorrichtung, für das Vergüten, insbesondere für das Nachvergüten, von Dentalrestaurationsteilen (40) aus polymerisierbaren Kunststoffen, insbesondere durch Stereolithograpie hergestellten Dentalrestaurationsteilen (40), mit mindestens einer Lichtquelle (72), die im Bereich sichtbarer und/oder ultravioletter Wellenlängen emittiert, und mit einem Gebläse (30) für die Kühlung der Polymerisations- und Vergütungsvorrichtung (10), mit einer Lichtkammer (24), bei der mindestens eine Wand, z.B. Deckenwand (70), Bodenwand oder Seitenwand (56), mit der mindestens einen Lichtquelle (60, 72) bestückt ist, und mit einer Tür zur Lichtkammer (24), mit einem Ablageort für Dentalrestaurationsteile (40), wobei das Gebläse (30) in einem Luftkanal (14) angeordnet ist, der sich durch ein Gehäuse (12) der Polymerisations- und Vergütungsvorrichtung (10) erstreckt und insbesondere mindestens die Lichtquellen-Wand hinterströmt **dadurch gekennzeichnet, dass** die Tür zur Lichtkammer (24) umlaufend mit einer Labyrinthdichtung ausgestattet ist und wobei die Polymerisat ions- und Vergütungsvorrichtung (10) lichtdicht ist.

3. Polymerisations- und Vergütungsvorrichtung nach Anspruch 1 oder 2, **dadurch gekennzeichnet, dass** der Luftkanal (14) sich quer durch das Gehäuse (12) der Polymerisations- und Vergütungsvorrichtung (10) erstreckt, von einem Lufteinlass (16) zu einem Luftauslass (80), wobei insbesondere Lufteinlass (16) und Luftauslass (80) an unterschiedlichen Wänden (Deckenwand (70), Bodenwand, Seitenwand (56)) des Gehäuses (12) angeordnet sind und besonders bevorzugt an einander gegenüber liegenden Wänden.

4. Polymerisations- und Vergütungsvorrichtung nach einem der vorhergehenden Ansprüche, **dadurch gekennzeichnet, dass** der Luftkanal (14) sich durch eine Mehrzahl von Wärmequellen, wie ein Netzteil, eine Leistungselektronik, die Lichtkammer (24), die Lichtquellen (72) und/oder LED-Chips, erstreckt, die nacheinander von Kühlluft, die durch den Lufteinlass ansaugbar ist, gekühlt werden.

5. Polymerisations- und Vergütungsvorrichtung nach einem der vorhergehenden Ansprüche, **dadurch gekennzeichnet, dass** das Gebläse (30) im Luftkanal (14) vor oder nach, insbesondere aber zwischen zwei Wärmequellen angeordnet ist, wobei eine Wärmequellen bevorzugt das Netzteil und/oder die Leistungselektronik ist.

6. Polymerisations- und Vergütungsvorrichtung nach einem der vorhergehenden Ansprüche, **dadurch gekennzeichnet, dass** zwischen der Lichtkammer (24) und dem Luftauslass (80) einerseits und der Lichtkammer (24) und dem Lufteinlass (16) andererseits eine Mehrzahl von, insbesondere mindestens zwei, Umlenkungen (44) des Luftkanals (14) ausgebildet sind.

7. Polymerisations- und Vergütungsvorrichtung nach einem der vorhergehenden Ansprüche, **dadurch gekennzeichnet, dass** die Lichtquelle (72) eine Bestrahlungsstärke von mindestens 50 Milliwatt pro cm², insbesondere 160 bis 280 Milliwatt pro cm², auf das Dentalrestaurationsteil (40) abgibt, ggf. unter Zuhilfenahme einer Ulbrichtkugel.

8. Polymerisations- und Vergütungsvorrichtung nach einem der vorhergehenden Ansprüche, **dadurch gekennzeichnet, dass** der Luftkanal (14) innen schwarz gefärbt oder beschichtet ist, insbesondere vollständig und/oder dass die Lichtkammer (24) innen verspiegelt ist.

9. Polymerisations- und Vergütungsvorrichtung nach einem der vorhergehenden Ansprüche, **dadurch gekennzeichnet, dass** dem Lichtkammereinlass (36) und/oder dem Lichtkammerauslass (48) benachbart ausserhalb der Lichtkammer (24) eine Blende (34), insbesondere eine schwarze Blende (34), angebracht ist, die von der Wand der Lichtkammer (24) ausgehend nach schräg aussen weist und eine zusätzliche Luftumlenkung (64) unter Abschattung des durch den Lichtkammereinlass (36) und/oder den Lichtkammerauslass (48) fallenden Lichts erzeugt.

10. Polymerisations- und Vergütungsvorrichtung nach einem der vorhergehenden Ansprüche, **dadurch gekennzeichnet, dass** die Lichtquellen (72) mindestens an einer Deckenwand (70) der Lichtkammer und einer Seitenwand (56) der Lichtkammer (24) angebracht sind und insbesondere eine Vielzahl von im Raster angeordneten LEDs umfassen.

11. Polymerisations- und Vergütungsvorrichtung nach einem der vorhergehenden Ansprüche, **dadurch gekennzeichnet, dass** der Luftkanal (14) sich mindestens an zwei aneinander benachbarten Wänden der Lichtkammer (24) aussen entlang erstreckt, mindestens denen, die Lichtquellen (72) aufweisen, insbesondere an drei Wänden oder mehr Wänden der Lichtkammer (24).

12. Polymerisations- und Vergütungsvorrichtung nach einem der vorhergehenden Ansprüche, **dadurch gekennzeichnet, dass** der Luftkanal (14) sich durch die Leistungselektronik (22), einschließlich des Netzteils, durch die Lichtkammer (24) und über die Lichtquellen (72) hinweg erstreckt, welche je Wärmequellen bilden.

13. Polymerisations- und Vergütungsvorrichtung nach einem der vorhergehenden Ansprüche, **dadurch gekennzeichnet, dass** das Gebläse (30) als Axialgebläse ausgebildet ist, dessen Gebläseradflügel mindestens 60%, bevorzugt mindestens 80% der Durchströmungsfläche, die in den Gebläse (30) ausgebildet ist, abdecken.

14. Polymerisations- und Vergütungsvorrichtung nach einem der vorhergehenden Ansprüche, **dadurch gekennzeichnet, dass** die Lichtkammer (24) einen Drehteller (42) an ihrer Bodenwand aufweist, mit welchem die Dentalrestaurationsteile (40) während der Polymerisation drehbar sind.

15. Polymerisations- und Vergütungsvorrichtung nach Anspruch 14, **dadurch gekennzeichnet, dass** sie ein Stereolithographie-Gerät mit einer Bauplattform aufweist und der Drehteller (42) eine solche Größe und die Lichtkammer (24) eine solche Größe aufweist, dass die Bauplattform des Stereolithographie-Geräts auf den Drehteller (42) unter freier Drehmöglichkeit der Bauplattform (90) abstellbar ist.

## Claims

1. A polymerization and finish device, for the finishing, especially for post-finishing, of dental restoration parts (40) made of polymerizable plastics, especially dental restoration parts (40) produced by stereolithography, having at least one light source (72) which emits in the range of visible and/or ultraviolet wavelengths and with a blower (30) for cooling the polymerization and finish device (10), comprising a light chamber (24), in which at least one wall (ceiling wall (70), floor wall, side wall (56)) is provided with the at least one light source (60, 72), and a door leading to the light chamber (24) having a storage location for dental restoration parts (40), the blower (30) being arranged in an air duct (14) which extends through a housing (12) of the polymerization and finish device (10) and especially flowing behind at least the light source wall **characterized in in that** the air duct (14) extends through the light chamber (24) and the light chamber (24) has a light chamber inlet (36) and a light chamber outlet (48) which are mounted on different walls of the light chamber (24), and **in that** the air duct, with a plurality of deflections, transversely extends through the housing and is impermeable to light by virtue of the particular design.

2. The polymerization and finish device , for finishing, especially for post-finishing, of dental restoration parts (40) made of polymerizable plastics, especially dental restoration parts (40) produced by stereolithography, comprising at least one light source (72), which emits in the range of visible and/or ultraviolet wavelengths, and a fan (30) for cooling the polymerization and finish device (10), a light chamber (24), in which at least one wall (top wall (70), bottom wall, side wall (56)) is provided with the at least one light source (60, 72), and comprising a door to the light chamber (24), a storage location for dental restoration parts (40), wherein the fan (30) is arranged in an air duct (14) which extends through a housing (12) of the polymerization and finish device (10) and especially flowing behind at least the light source wall, and wherein the door to the light chamber (24) is circumferentially provided with a labyrinth seal, and wherein the polymerization and finish device (10) is impermeable to light.

3. The polymerization and finish device according to claims 1 or 2, **characterized in that** the air duct (14) transversely extends through the housing (12) of the polymerization and finish device (10), from an air inlet (16) to an air outlet (80), wherein especially the air inlet (16) and air outlet (80) are arranged on different walls (ceiling wall (70), bottom wall, side wall (56)) of the housing (12) and especially preferably are arranged on opposite walls.

4. The polymerization and finish device according to one of the preceding claims, **characterized in that** the air duct (14) extends through a plurality of heat sources, such as a power supply, power electronics, the light chamber (24), light sources (72) and/or LED chips, which are successively cooled by cooling air that can be absorbed through the air inlet.

5. The polymerization and finish device according to one of the preceding claims, **characterized in that** the fan (30) is arranged in the air duct (14) before or after, but especially between, two heat sources, one heat source preferably being the power supply unit and/or the power electronics.

6. The polymerization and finish device according to one of the preceding claims, **characterized in that** a plurality of, especially at least two, deflections (44) of the air duct (14) are formed between the light chamber (24) and the air outlet (80) on the one hand and the light chamber (24) and the air inlet (16) on the other hand.

7. The polymerization and finish device according to one of the preceding claims, **characterized in that** the light source (72) emits an irradiance of at least 50 milliwatts per cm², especially 160 to 280 milliwatts per cm², onto the dental restoration part (40), optionally using an integrating sphere.

8. The polymerization and finish device according to one of the preceding claims, **characterized in that** the air duct (14) is colored or coated black on the inside, and especially is completely coated and/or that the light chamber (24) is mirrored on the inside.

9. The polymerization and finish device according to one of the preceding claims, **characterized in that** adjacent to the light chamber inlet (36) and/or the light chamber outlet (48), outside the light chamber (24), a diaphragm (34), especially a black diaphragm (34), is provided, which, starting from the wall of the light chamber (24), obliquely faces outwards and producing an additional air deflection (64) while shading the light inciding through the light chamber inlet (36) and/or the light chamber outlet (48).

10. The polymerization and finish device according to one of the preceding claims, **characterized in that** the light sources (72) are mounted at least on a ceiling wall (70) of the light chamber and a side wall (56) of the light chamber (24) and especially comprising a plurality of LEDs arranged in a grid.

11. The polymerization and finish device according to one of the preceding claims, **characterized in that** the air duct (14) outwardly extends along at least two adjacent walls of the light chamber (24), at least those comprising light sources (72), especially three walls or more walls of the light chamber (24).

12. The polymerization and finish device according to one of the preceding claims, **characterized in that** the air duct (14) extends through the power electronics (22), including the power supply, through the light chamber (24) and across the light sources (72), which each form heat sources.

13. The polymerization and finish device according to any of the preceding claims, **characterized in that** the blower (30) is formed as an axial blower, the blower wheel blades of which cover at least 60%, preferably at least 80% of the flow area formed in the blower (30).

14. The polymerization and finish device according to one of the preceding claims, **characterized in that** the light chamber (24) comprises a rotary plate (42) on its bottom wall, which is used to rotate the dental restoration parts (40) during polymerization.

15. The polymerization and finish device according to claim 14, **characterized in that** it comprises a stereolithography device comprising a build platform and the turntable (42) has a size and the light chamber (24) has a size such that the build platform of the stereolithography device can be placed on the turntable (42) while freely rotating the build platform (90).

## Revendications

1. Dispositif de polymérisation et de trempe, pour la trempe, en particulier pour la post-trempe, de pièces de restauration dentaire (40) en matières plastiques polymérisables, en particulier de pièces de restauration dentaire (40) fabriquées par stéréolithographie, avec au moins une source de lumière (72) qui émet dans la gamme des longueurs d'onde visibles et/ou ultraviolettes, et avec un ventilateur (30) pour refroidir le dispositif de polymérisation et de trempe (10), avec une chambre de lumière (24), dans laquelle au moins une paroi (paroi de plafond (70), paroi de sol, paroi latérale (56)) est équipée de ladite au moins une source de lumière (60, 72), et avec une porte vers la chambre de lumière (24), avec un emplacement de stockage pour des pièces de restauration dentaire (40), où la soufflerie (30) est disposée dans un conduit d'air (14) qui s'étend à travers un boîtier (12) de l'appareil de polymérisation et de trempe (10) et s'écoule notamment derrière au moins la paroi de la source lumineuse, **caractérisé en ce que en ce que** le conduit d'air (14) s'étend à travers la chambre de lumière (24) et la chambre de lumière (24) présente une entrée de chambre de lumière (36) et une sortie de chambre de lumière (48) qui sont montées sur différentes parois de la chambre de lumière (24), et **en ce que** le conduit d'air s'étend avec une pluralité de déviations transversalement à travers le boîtier et est étanche à la lumière en raison de la conception particulière.

2. Dispositif de polymérisation et de trempe, pour la trempe, en particulier pour la post-trempe, de pièces de restauration dentaire (40) en matières plastiques polymérisables, en particulier de pièces de restauration dentaire (40) fabriquées par stéréolithographie, avec au moins une source de lumière (72), qui émet dans la gamme des longueurs d'onde visibles et/ou ultraviolettes, et avec un ventilateur (30) pour refroidir le dispositif de polymérisation et de trempe (10), avec une chambre de lumière (24), dans laquelle au moins une paroi (paroi supérieure (70), paroi inférieure, paroi latérale (56)) est équipée de ladite au moins une source de lumière (60, 72), et d'une porte vers la chambre de lumière (24), avec un emplacement de stockage pour des pièces de restauration dentaire (40), où la soufflerie (30) est disposée dans un conduit d'air (14) qui s'étend à travers un boîtier (12) de l'appareil de polymérisation et de trempe (10) et s'écoule en particulier derrière au moins la paroi de la source lumineuse, et où la porte de la chambre lumineuse (24) est équipée d'un joint à labyrinthe surtout son pourtour, et l'appareil de polymérisation et de trempe (10) est étanche à la lumière.

3. Appareil de polymérisation et de traitement thermique selon la revendication 1 ou 2, **caractérisé en ce que** le conduit d'air (14) s'étend transversalement à travers le boîtier (12) de l'appareil de polymérisation et de trempe (10) depuis une entrée d'air (16) jusqu'à une sortie d'air (80), où en particulier l'entrée d'air (16) et la sortie d'air (80) sont disposées sur différentes parois (paroi de plafond (70), paroi de base, paroi latérale (56)) du boîtier (12) et de manière particulièrement préférée sur des parois mutuellement opposées.

4. Appareil de polymérisation et de trempe selon l'une des revendications précédentes, **caractérisé en ce que** le conduit d'air (14) s'étend à travers une pluralité de sources de chaleur, telles qu'une unité d'alimentation, une électronique de puissance, la chambre de lumière (24), des sources de lumière (72) et/ou des puces LED, qui sont successivement refroidies par de l'air de refroidissement pouvant être aspiré par l'entrée d'air.

5. Appareil de polymérisation et de trempe selon l'une des revendications précédentes, **caractérisé en ce que** le ventilateur (30) est disposé dans le conduit d'air (14) en amont ou en aval, mais en particulier entre deux sources de chaleur, une source de chaleur étant de préférence le bloc d'alimentation et/ou l'électronique de puissance.

6. Appareil de polymérisation et de trempe selon l'une des revendications précédentes, **caractérisé en ce que** plusieurs, en particulier au moins deux, déflecteurs (44) du conduit d'air (14) sont formés entre la chambre de lumière (24) et la sortie d'air (80) d'une part et la chambre de lumière (24) et l'entrée d'air (16) d'autre part.

7. Appareil de polymérisation et de trempe selon l'une des revendications précédentes, **caractérisé en ce que** la source lumineuse (72) émet un rayonnement d'au moins 50 milliwatts par cm2, notamment de 160 à 280 milliwatts par cm2, sur la pièce de restauration dentaire (40), éventuellement à l'aide d'une sphère d'intégration.

8. Dispositif de polymérisation et de trempe selon l'une des revendications précédentes, **caractérisé en ce que** le canal d'air (14) est coloré ou revêtu de noir à l'intérieur, en particulier complètement et/ou que la chambre de lumière (24) est réfléchie à l'intérieur.

9. Appareil de polymérisation et de trempe selon l'une des revendications précédentes, **caractérisé en ce qu'**un écran (34), en particulier un écran noir (34)est monté à côté de l'entrée (36) et/ou de la sortie (48) de la chambre à lumière, à l'extérieur de la chambre à lumière (24), qui, partant de la paroi de la chambre à lumière (24), est orienté obliquement vers l'extérieur et produit une déviation d'air supplémentaire (64) avec ombrage de la lumière tombant par l'entrée (36) et/ou la sortie (48) de la chambre à lumière.

10. Appareil de polymérisation et de trempe selon l'une des revendications précédentes, **caractérisé en ce que** les sources lumineuses (72) sont montées au moins sur une paroi supérieure (70) de la chambre lumineuse et une paroi latérale (56) de la chambre lumineuse (24) et comprennent notamment une pluralité de LED disposées en grille.

11. Appareil de polymérisation et de trempe selon l'une des revendications précédentes, **caractérisé en ce que** le conduit d'air (14) s'étend extérieurement le long d'au moins deux parois adjacentes de la chambre de lumière (24), au moins celles comprenant des sources de lumière (72), en particulier le long de trois parois ou plus de la chambre de lumière (24).

12. Appareil de polymérisation et de trempe selon l'une des revendications précédentes, **caractérisé en ce que** le conduit d'air (14) s'étend à travers l'électronique de puissance (22), y compris l'alimentation électrique, à travers la chambre de lumière (24) et à travers les sources de lumière (72), qui forment chacune des sources de chaleur.

13. Appareil de polymérisation et de trempe selon l'une des revendications précédentes, **caractérisé en ce que** la soufflerie (30) est réalisée sous la forme d'une soufflerie axiale dont les pales de la roue de soufflerie couvrent au moins 60%, de préférence au moins 80%, de la zone d'écoulement formée dans la soufflerie (30).

14. Appareil de polymérisation et de trempe selon l'une des revendications précédentes, **caractérisé en ce que** la chambre de lumière (24) présente sur sa paroi de fond un plateau tournant (42) avec lequel les pièces de restauration dentaire (40) peuvent être tournées pendant la polymérisation.

15. Dispositif de polymérisation et de trempe selon la revendication 14, **caractérisé en ce qu'**il comprend un appareil de stéréolithographie avec une plate-forme de fabrication et le plateau tournant (42) a une taille telle et la chambre de lumière (24) a une taille telle que la plate-forme de fabrication de l'appareil de stéréolithographie peut être placée sur le plateau tournant (42) avec une rotation libre de la plate-forme de construction (90).
